# EUROPEAN PATENT APPLICATION

(11) **EP 0 794 228 A2**
(43) Date of publication of application: **10.09.1997**
(21) Application number: 97301376.6
(22) Date of filing: 03.03.1997
(51) Int. Cl.: C08L 67/02

(54) **Polyester resin composition**

(30) Priority: 06.03.1996 JP 48502/96
(71) Applicant: TORAY INDUSTRIES, INC., Tokyo (JP)
(72) Inventor: Nishimura, Toru, Nagoya-shi, Aichi 458 (JP); Utazaki, Kenichi, Nagoya-shi, Aichi 458 (JP); Hiratsuka, Motoki,, Chita-gun, Aichi 470-21 (JP)
(74) Representative: Coleiro, Raymond

(57) **Abstract**

A crystalline polyolefin, an unsaturated carboxylic acid and/or its derivative, and a thermoplastic polyester are melt-blended to give a polyester resin composition. The composition is suitable for moulding by injection molding to give shaped articles having a thin partition wall structure with a thickness of 0.8 mm or smaller.

## Description

### BACKGROUND OF THE INVENTION

### Field of the Invention

The present invention relates to a polyester resin composition which is usable in the field of electrical and electronic parts and in the field of car parts, and especially suitable for wire harness connector parts in, for example, cars, and which is advantageous in that, when shaped into such parts, even the thinnest areas thereof have good mechanical properties.

### Prior Art

Thermoplastic polyesters, such as typically polyethylene terephthalates and polybutylene terephthalates, are widely used in various fields of, for example, car parts, electrical parts and electronic parts, as having good mechanical characteristics, heat resistance, chemical resistance, weather resistance and electric characteristics. Recently, there has been an increasing demand for such parts to be much smaller in size and thinner, for the purpose of reducing their costs and making them lightweight. At present, therefore, thermoplastic polyesters are desired to have increased fluidity and to be easily releasable from molds, in order to satisfy such requirements.

In general, thermoplastic polyesters having a low molecular weight may have increased fluidity. However, shaped articles of thermoplastic polyesters having such a low molecular weight are not satisfactory, since their impact resistance is poor.

On the other hand, it is believed effective to add polyolefins to such thermoplastic polyesters in order to improve the impact resistance of the shaped articles made from them, and many proposals for this have previously been made. For example, Japanese Patent Publication Nos. 57-54058 and 57-59261 disclose a means of adding modified ethylene polymers grafted with unsaturated carboxylic acids or their derivatives to polyester resins; and Japanese Patent Publication No. 7-62105 discloses a means of melt-blending polyester resins, ethylene/α-olefin copolymers, maleic acid or its anhydride, and radical generators.

Although the impact resistance of the shaped articles so produced may give some improvement, the resin mixtures proposed in these patent publications still present problems in that, when they are shaped into small-sized lightweight parts having thin partition wall structure parts with a thickness of 0.8 mm or smaller, their shapability to give such thin parts is poor and, in addition, the mechanical strength of such thin parts formed is also poor. The problem is especially serious when the resin mixtures are shaped into articles composed of thick parts with a thickness of not smaller than 0.8 mm and thin partition wall structure parts with a thickness of 0.8mm or smaller. Therefore, it is desired to overcome this problem.

The present invention addresses this problem and provides, according to a first aspect, a polyester resin composition suitable for injection molding to give shaped articles having a thin partition wall structure with a thickness of 0.8mm or smaller, which composition comprises a crystalline polyolefin resin (A), an unsaturated carboxylic acid and/or its derivative (B), and a thermoplastic polyester (C).

The present invention also provides, according to a second aspect, a shaped article having a thin partition wall structure with a thickness of 0.8mm or smaller and composed of a composition comprising the above-mentioned components (A), (B) and (C).

The present invention additionally provides, according to a third aspect, a method for producing a polyester resin composition, which method comprises melt-blending the above-mentioned components (A), (B) and (C).

According to a fourth aspect, the present invention provides a method of preparing a shaped article having a thin partition wall structure with a thickness of 0.8mm or less, which method comprises injection moulding a composition comprising the above-mentioned components (A), (B) and (C).

Preferred embodiments of the invention are now described in more detail. The word "weight" as referred to herein means "mass".

The crystalline polyolefin resin (A) for use in the present invention may be a homo- or co-polymer of olefin monomers, preferably having a degree of crystallinity as measured according to an X-ray method of 40 % or higher, more preferably 60 % or higher, still more preferably 80% or higher. Specific examples of the polyolefins may include homopolymers of α-olefins, such as ethylene, propylene, butene-1, pentene-1, 4-methylpentene-1 and octene-1, or cycloolefins to be derived from cyclopentadienes and olefins; random, block or graft copolymers of two or more of such monomers; and their mixtures. Of these polyolefins, preferred are polyethylene and polypropylene. Especially preferred are high-pressure low-density polyethylene, linear low-density polyethylene, and high-density polyethylene.

Polyolefin resins having a degree of crystallinity of smaller than 40 % may be unsuitable for use in the present invention, since the strength of the thin partition wall structure with a thickness of not larger than 0.8 mm of the shaped articles made from resin compositions comprising them may be low.

It is preferable that the polyolefin resin (A) for use in the present invention has, while being in the composition of the invention, a melting point of from 100 to 220°C, more preferably from 120 to 150°C. If its melting point is lower than 100°C, such is unfavorable since the resin (A) is not satisfactorily effective for enhancing the strength of the thin partition wall structure of the shaped articles made from the composition of the invention. If, on the other hand, its melting point is higher than 220°C, such is also unfavorable since the resin (A) is poorly miscible with polyester resins, resulting in worsening the mechanical properties of the shaped articles made from the composition comprising said resin (A). The melting point of the polyolefin resin (A) as referred to herein corresponds to the position of the endothermic peak appearing through differential scanning calorimetry (DSC) of the polyester resin composition of the invention comprising said resin (A), said endothermic peak being derived from the melting of said resin (A) in the composition. This value is to be the index for the degree of crystallinity of the polyester resin (A).

The component (B) for use in the present invention comprises an unsaturated carboxylic acid and/or its derivative. The unsaturated carboxylic acid may include, for example, acrylic acid, methacrylic acid, maleic acid, fumaric acid, itaconic acid, crotonic acid, isocrotonic acid, tetrahydrophthalic acid, citraconic acid, and butenedicarboxylic acid. Its derivative may include, for example, alkyl esters and acid anhydrides. Of these, preferred are acid anhydrides. For example, preferably used are maleic anhydride and itaconic anhydride. Two or more of such unsaturated carboxylic acids and their derivatives may be used herein in combination.

Where the constitutive components are melt-blended to prepare the composition of the present invention, the amount of the unsaturated carboxylic acid and/or its derivative (B) is preferably from 0.1 to 20 % by weight, more preferably from 0.5 to 10 % by weight, relative to the amount of the polyolefin resin (A) in the composition, in view of the fact that the component (B) of the amount falling within said range is effective for enhancing the mechanical strength of the shaped articles to be made from the composition without giving any insoluble solids when crosslinked.

The component (B) comprising such an unsaturated carboxylic acid and/or its derivative may be grafted onto the polyolefin resin (A) to thereby enhance the miscibility of the resulting polyolefin resin (A) with polyester resins. To more effectively attain the intended grafting of the component (B) onto the polyolefin resin (A), it is desirable to add, to the melt-blending system, iron 0.01 to 0.1 % by weight, relative to the polyolefin resin (A), of a radical generator, for example, an organic peroxide. It is especially preferred that the radical generator to be used for that purpose has a molecular weight of 200 or more. More specifically, the radical generator may include, for example, t-butylcumyl peroxide, di-t-butyl peroxide, dicumyl peroxide, 2,5-dimethyl-2,5-di(t-butylperoxy)hexane, 2,5-dimethyl-2,5-di(t-butylperoxy)hexyne-3, and α,α'-di(t-butylperoxy)diisopropylbenzene.

The thermoplastic polyester (C) for use in the present invention may include, for example, polymers and copolymers to be obtained through condensation of components consisting essentially of a dicarboxylic acid (or its ester-forming derivative) and a diol (or its ester-forming derivative), and their mixtures.

The dicarboxylic acid may include, for example, aromatic dicarboxylic acids such as terephthalic acid, isophthalic acid, phthalic acid, 2,6-naphthalenedicarboxylic acid, 1,5-naphthalenedicarboxylic acid, bis(p-carboxyphenyl)methane, anthracene-dicarboxylic acid, 4,4'-diphenylether-dicarboxylic acid, and 5-sodiumsulfoisophthalic acid; aliphatic dicarboxylic acids such as adipic acid, sebacic acid, azelaic acid, and dodecane-dicarboxylic acid; alicyclic dicarboxylic acid such as 1,3-cyclohexane-dicarboxylic acid, and 1,4-cyclohexane-dicarboxylic acid; and their ester-forming derivatives. The diol component may include, for example, aliphatic glycols having from 2 to 20 carbon atoms, such as ethylene glycol, propylene glycol, 1,4-butanediol, neopentyl glycol, 1,5-pentanediol, 1,6-hexanediol, decamethylene glycol, cyclohexane-dimethanol, and cyclohexanediol; long-chain glycols having a molecular weight of from 400 to 6000, such as polyethylene glycol, poly-1,3-propylene glycol, and polytetramethylene glycol; and their ester-forming derivatives.

Preferred examples of the polymers and copolymers may include, for example, polybutylene terephthalate, polybutylene (terephthalate/isophthalate), polybutylene (terephthalate/adipate), polybutylene (terephthalate/sebacate), polybutylene (terephthalate/decanedicarboxylate), polybutylene naphthalate, polyethylene terephthalate, polyethylene (terephthalate/isophthalate), polyethylene (terephthalate/adipate), polyethylene (terephthalate/5-sodiumsulfoisophthalate), polybutylene (terephthalate/5-sodiumsulfoisophthalate), polyethylene naphthalate, and polycyclohexanedimethylene terephthalate. From the viewpoint of the shapability of the thermoplastic polyester composition, especially preferred are polybutylene terephthalate, polybutylene (terephthalate/adipate), polybutylene (terephthalate/decanedicarboxylate), polybutylene naphthalate, polyethylene terephthalate, polyethylene (terephthalate/adipate), polyethylene naphthalate, and polycyclohexanedimethylene terephthalate. Most preferred is polybutylene terephthalate.

The thermoplastic polyester is especially preferably one having an intrinsic viscosity of from 0.36 to 1.60 dl/g, more preferably from 0.52 to 1.35 dl/g, when measured in the form of its o-chlorophenol solution at 25°C, in view of the mechanical characteristics and the shapability of the composition comprising it. If its intrinsic viscosity is smaller than 0.36 dl/g, the mechanical characteristics of the composition comprising the polyester may be bad; but if it is larger than 1.60 dl/g, the shapability of said composition may be poor.

The thermoplastic polyester (C) for use in the present invention is preferably an aromatic polyester mixture comprising polybutylene terephthalate and a polyester of low crystallinity (hereinafter a "low-crystalline polyester"), since the degree of shaping shrinkage of the polyester resin composition comprising such a mixture is small. Examples of the low-crystalline polyester may include polybutylene (terephthalate/isophthalate), polybutylene (terephthalate/isophthalate), polyethylene terephthalate, polyethylene (terephthalate/isophthalate), polyethylene (terephthalate/adipate), bisphenol A (terephthalate/isophthalate), polybutylene (terephthalate/naphthalate), polyethylene naphthalate, polycyclohexanedimethylene terephthalate, polycyclohexanedimethylene (terephthalate/isophthalate), poly(cyclohexanedimethylene/ethylene) terephthalate, and poly(cyclohexanedimethylene/ethylene) (terephthalate/isophthalate). Of these, preferred is poly(cyclohexanedimethylene/ethylene) terephthalate, for providing improved shapability, fluidity and mechanical characteristics, especially impact resistance and heat resistance, of the polyester resin composition comprising it. Especially preferred is poly(cyclohexanedimethylene/ethylene) terephthalate in which the molar ratio of the constitutive cyclohexanedimethanol component to the constitutive ethylene glycol component is from 50/50 to 80/20. Where such a low-crystalline polyester resin is incorporated into the composition of the invention, its amount is preferably from 1 to 50 % by weight, more preferably from 5 to 30 % by weight, relative to the polyester resin in the composition.

As the index for the low-crystallinity of the low-crystalline polyester for use in the present invention, referred to is the time for 50-% crystallization of the polyester to be determined through differential scanning calorimetry thereof. More specifically, it is preferred to use in the present invention low-crystalline polyesters requiring a time for 50-% crystallization of not shorter than 10 times that for polybutylene terephthalate, or those giving no crystallization peak.

The low-crystalline polyester for use in the present invention is especially preferably one having an intrinsic viscosity of from 0.36 to 1.55 dl/g, more preferably from 0.52 to 1.25 dl/g, when measured in the form of its o-chlorophenol solution at 25°C, For improved mechanical characteristics and the shapability of the composition comprising it. If its intrinsic viscosity is smaller than the defined range, the mechanical characteristics of the composition comprising it may be bad; but if its intrinsic viscosity is larger than 1.55 dl/g, the shapability of said composition may be poor.

The polyester resin composition of the present invention may be prepared by any known method.

Specific examples of melt-blending the constitutive components to give the composition are a method using a double-screw extruder in which the component (A) comprising a crystalline polyolefin and the component (B) comprising an unsaturated carboxylic acid and/or its derivative are melt-blended to give a modified polyolefin, and the component (C) comprising a thermoplastic polyester is added to the resulting modified polyolefin; a method using a double-screw extruder having two feeders, in which the component (A) comprising a crystalline polyolefin and the component (B) comprising an unsaturated carboxylic acid and/or its derivative are fed into the extruder through the main feeder as disposed near the stems of the screws, while the component (C) comprising a thermoplastic polyester is fed thereinto through the side feeder as disposed between said main feeder and the tip of the extruder, and thus these components are melt-blended together; and a method using a batchwise mixer in which the component (A) comprising a crystalline polyolefin is first melt-blended with the component (B) comprising an unsaturated carboxylic acid and/or its derivative, and after a predetermined period of time, the component (C) comprising a thermoplastic polyester is added to the resulting blend in the mixer. Of these methods, preferred is the method using such a double-screw extruder having two feeders, in which the component (A) comprising a crystalline polyolefin and the component (B) comprising an unsaturated carboxylic acid and/or its derivative are fed into the extruder through a main feeder disposed near the stems of the screws (upstream the extruder), while the component (C) comprising a thermoplastic polyester is fed thereinto through a side feeder disposed between said main feeder and the tip of the extruder, and thus these components are melt-blended together. If desired, the polyester resin composition thus obtained according to any of the above-mentioned methods may be further kneaded with any other polyester resin to give a final polyester resin composition.

The shaped article of the present invention can be obtained by any known injection molding method applied to the above-mentioned polyester resin composition. Prior to being subjected to injection molding, the polyester resin composition may be pelletized into master pellets and mixed with pellets of any other thermoplastic polyester.

The shaped article of the present invention has a thin partition wall structure with a thickness of 0.8 mm or smaller, in which the thin partition wall structure is one having some partition walls each having a thickness of 0.8 mm or smaller, preferably from 0.2 to 0.8 mm in, for example, a box-shaped article. Naturally, the shaped article of the invention may have other parts having a thickness of larger than 0.8 mm.

The amount of the thermoplastic polyester present in the resin composition of the present invention is preferably from 60 to 99.5 % by weight, more preferably from 80 to 99.5 % by weight, even more preferably from 95 to 99.5% by weight of the total weight of the composition. If the amount of the thermoplastic polyester is larger than 99.5% by weight, the impact strength of the shaped articles made from the composition could not be enhanced. If, however, it is smaller than 60% by weight, the shapability of the composition the shapability of the composition may be poor, resulting in that the mechanical strength of the thin partition wall parts with a thickness of 0.8 mm or smaller in the resulting shaped articles may be lost.

The amount of the crystalline polyolefin resin present in the resin composition of the present invention is preferably from 0.1 to 40 % by weight, more preferably from 0.5 to 20% by weight, even more preferably from 0.5 to 5% by weight of the total weight of the composition.
If the amount of the crystalline polyolefin resin is smaller than 0.1 % by weight, the resin added is ineffective for enhancing the impact strength of the shaped articles of the composition. If, however, it is larger than 40 % by weight, the shapability of the composition may be poor, resulting in that the mechanical strength of the thin partition wall parts with a thickness of 0.8 mm or smaller in the resulting shaped articles may be lost.

The composition of the present invention may additionally contain any other various additives so far as the additives do not interfere with the effects of the invention. Such additives may include, for example, reinforcing agents, fillers and nucleating agents, such as glass fiber, carbon fiber, asbestos fiber, rock wool, calcium carbonate, silica sand, bentonite, kaolin, talc, wollastenite, barium sulfate, glass beads, and mica; antioxidants such as phosphorus compounds, and sulfur compounds; ultraviolet absorbents; heat stabilizers such as hindered phenols; lubricants; mold releases; colorants comprising dye and pigment; flame retardants such as halogen compounds, and phosphorus compounds; flame-retardation promoters such as antimony compounds (e.g., antimony trioxide), zirconium oxide, and molybdenum oxide; foaming agents; and crosslinking agents such as polyepoxy compounds, isocyanate compounds, and acid anhydrides. In addition, the composition may further contain any other synthetic resins, such as polyamides, ethylene/vinyl acetate copolymers, phenoxy resins, epoxy resins, and silicone resins.

Since the shaped articles to be obtained through injection molding of the composition of the present invention have well-balanced mechanical strength and toughness in both the thin partition wall parts and the other thick parts, they can be used, for example, as car parts and electric parts. In particular, they are especially preferably used as wire harness connectors in cars. Above all, the resin composition of the invention having a polyolefin content (ie total weight of components A and B) of from 0.5 to 5% by weight of the total weight of the composition is especially preferred for use in producing wire harness connectors for cars, because the thin partition wall parts in the shaped articles made from the composition have high mechanical strength and are therefore highly efficient in holding metal terminals.

Especially preferred embodiments of the invention will now be described in more detail with reference to the accompanying drawings and Examples given below. In the drawings:
Fig. 1 shows an outline of a shaped article as formed in the Examples below. Fig. 1A is a front view of the shaped article of Fig. 1; Fig. 1B is a plan view thereof; and Fig. 1C is a right-hand side view thereof; and
Fig. 2 is a perspective outline view showing the wedge tool used for evaluating the shaped articles in the Examples.

### Production of Polyester Resin Compositions:

### Reference Example 1: Production of A-a

High-density polyethylene (hereinafter referred to as HDPE) having a melt flow rate at 190°C of 3.2 g/10 min and having a degree of crystallinity as measured by x-rays of 85%, maleic anhydride (hereinafter referred to as MAH), and a radical initiator, 2,5-dimethyl-2,5-di-t-butylperoxyhexane (Perhexa 2.5B; trade name of the product of Nippon Oils and Fats Co.) were mixed in the ratio as shown in Table 1 below, and fed into an extruder through its main feeder; while polybutylene terephthalate (hereinafter referred to as PBT) having an intrinsic viscosity of 0.88 was fed thereinto through its side feeder. Thus, these were melt-blended in the extruder to give a resin composition (A-a). The extruder employed herein was a double-screw extruder, in which each screw had a length of 30 mm and a ratio of length/diameter, L/D, of 35, and the cylinder temperature was set at 230°C from its main feeder to its side feeder and was at 260°C after its side feeder.

### Reference Example 2: Production of A-b

In the same manner as in Reference Example 1, except that a part of PBT was replaced by poly(cyclohexanedimethylene/ethylene) terephthalate (hereinafter referred to as PCT polymer) having an intrinsic viscosity of 0.88 and having an ethylene glycol content of 30 mol% relative to the total glycol content and that said PCT polymer was fed into the extruder along with PBT, a polyester resin composition (A-b) was obtained herein.

### Reference Example 3: Production of A-c

In the same manner as in Reference Example 1, except that low-density polyethylene (LDPE) having a melt flow rate at 190°C of 2 g/10 min and having a degree of crystallinity as measured by X-rays of 47% was used in place of HDPE, a polyester resin composition (A-c) was obtained herein.

### Reference Example 4: Production of A-d (for use in Comparative Examples)

In the same manner as in Reference Example 1, except that ethylene-butene-1 copolymer (E/B-1) having a melt flow rate at 190°C of 3.6 g/10 min, having a degree of crystallinity as measured bY X-rays of 20% and having a butene-1 content of 14 mol% was used in place of HDPE, a polyester resin composition (A-d) was obtained herein.

**Table 1**

| | | Reference Example | | | |
|---|---|---|---|---|---|
| | | 1 | 2 | 3 | 4 |
| | | A-a | A-b | A-c | A-d |
| Polyester | PBT | 80 | 60 | 80 | 80 |
| | PCT Copolymer | | 20 | | |
| Polyolefin | HDPE | 20 | 20 | | |
| | LDPE | | | 20 | |
| | E/B-1 | | | | 20 |
| Carboxylic Acid | MAH | 0.6 | 0.6 | 0.6 | 0.6 |
| Radical Initiator | Perhexa 2.5B | 0.03 | 0.03 | 0.03 | 0.03 |
| The numerals in Table 1 are by weight. | | | | | |

### Examples 1 to 6:

In each Example, a polyester resin composition (A) chosen from those prepared in Reference Examples 1 to 3 (as shown in Table 2 below) was blended with polybutylene terephthalate having an intrinsic viscosity of 0.88 dl/g in the ratio as shown in Table 2, in a V-shaped blender, and then shaped into test pieces by injection molding using a screw-in-line type injection-molding machine, in which the cylinder tempereture was set at 270°C and the mold temperature was set at 40°C and to which was applied a mold locking force of 60 tons. The test pieces thus shaped had a thickness of 1/8 inches, and these were subjected to a tensile test in accordance with ASTM D638.

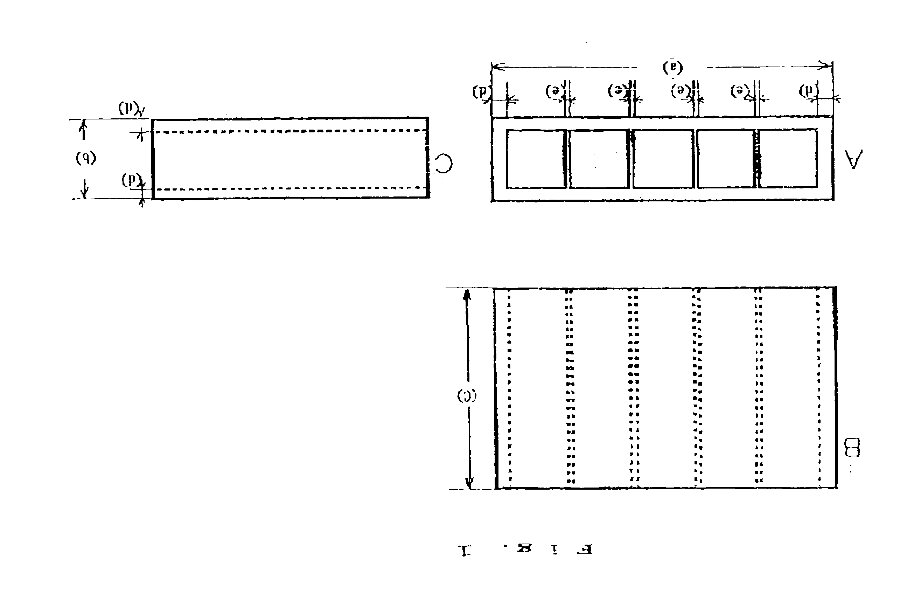

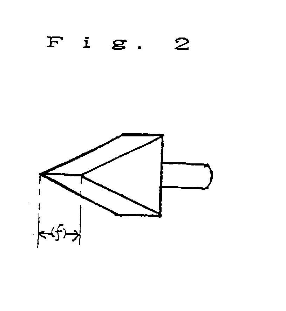

On the other hand, articles having the structure as illustrated in Fig. 1 were shaped under the same shaping conditions as above. An article as shown in Fig. 1 was produced herein, of which the height (a) was 12 mm, the width (b) was 50 mm, the depth (c) was 30 mm, the thickness of the thick walls (d) was 2 mm, and the thickness of the thin partition wall parts (e) was 0.5 mm. A wedge tool such as that shown in Fig. 2, which had a width (f) of 5 mm and a tip angle of 30°, was inserted between the adjacent partition walls of this article at a rate of 5 mm/min, whereupon the stress to the breakage of the partition walls was measured. The test was carried out at room temperature and at -10°C. One kfg as referred to herein is equal to 9.80665 N.

In addition, a part of each test piece was cut, whereupon the melting point of the polyolefin resin existing in the composition was measured by DSC at a temperature-rising rate of 20°C/min.

**Table 2**

| | | | Unit | Example | | | | | |
|---|---|---|---|---|---|---|---|---|---|
| | | | | 1 | 2 | 3 | 4 | 5 | 6 |
| (A) Polyester Resin Composition | | A-a | wt.pts. | 100 | | | 15 | | |
| | | A-b | | | 100 | | | 15 | |
| | | A-c | | | | 100 | | | 15 |
| (B) Polyester | | PBT | | 0 | 0 | 0 | 85 | 85 | 85 |
| Tensile Strength | | | MPa | 49 | 48 | 43 | 53 | 52 | 52 |
| Strength of Partition Walls | 23°C | Strength | kgf | 4.5 | 4.0 | 4.1 | 5.8 | 5.5 | 5.2 |
| | | Broken Condition | | ductile fracture | ductile fracture | ductile fracture | ductile fracture | ductile fracture | ductile fracture |
| | -10°C | Strength | kgf | 5.9 | 5.5 | 5.6 | 7.2 | 6.9 | 7.0 |
| | | Broken Condition | | ductile fracture | ductile fracture | ductile fracture | ductile fracture | ductile fracture | ductile fracture |
| Melting Point of Polyolefin | | | °C | 128 | 128 | 104 | 128 | 128 | 104 |

### Comparative Examples 1 and 2:

The polyester resin composition (A) as prepared in Reference Example 4 was blended with the same PBT having an intrinsic viscosity of 0.88 dl/g as that used in the above-mentioned examples, in the ratio shown in Table 3 below, in the same manner as in the Examples, and shaped into test pieces, which were then tested in the same manner as above. The data obtained herein are shown in Table 3. When measured by DSC, these samples gave no peak to be derived from the polyolefin component.

### Comparative Example 3:

The same PBT resin as that used in the above-mentioned Examples was shaped alone and tested in the same manner as above. The data obtained are shown in Table 3. Unfavorably, the partition wall parts of the test sample prepared herein were broken in brittle fracture at the low temperature of -10°C.

**Table 3**

| | | | Unit | Comparative Example | | |
|---|---|---|---|---|---|---|
| | | | | 1 | 2 | 3 |
| (A) Polyester Resin Composition | | A-d | wt.pts. | 100 | 15 | |
| (B) Polyester | | PBT | | 0 | 85 | 100 |
| Tensile Strength | | | MPa | 35 | 51 | 54 |
| Strength of Partition Walls | 23°C | Strength | kgf | 2.2 | 3.5 | 5.8 |
| | | Broken Condition | | ductile fracture | ductile fracture | ductile fracture |
| | -10°C | Strength | kgf | 3.8 | 4.7 | 7.1 |
| | | Broken Condition | | ductile fracture | ductile fracture | brittle fracture |
| Melting Point of Polyolefin | | | °C | - | - | - |

From the data obtained hereinabove, it can be seen that in the shaped articles made from the composition of the present invention and having thin partition wall parts, the thin parts have good toughness and high strength. Therefore, the composition of the present invention is suitable for forming shaped articles or car parts having a thin partition wall structure, for which the thin structure is required to have good mechanical strength, and is especially suitable for forming wire harness connectors in cars.

## Claims

1. A polyester resin composition comprising a melt mix of (A) a crystalline polyolefin resin, (B) an unsaturated carboxylic acid and/or its derivative, and (C) a thermoplastic polyester.

2. A polyester resin composition according to claim 1, wherein the polyolefin resin (A) has a degree of crystallinity of 40% or larger as measured by X-ray diffractometry.

3. A polyester resin composition according to claim 1 or claim 2, wherein the polyolefin resin (A) has a melting point of from 100 to 220°C.

4. A polyester resin composition according to any preceding claim, wherein the polyolefin resin (A) is polyethylene.

5. A polyester resin composition according to any preceding claim, wherein the thermoplastic polyester (C) consists essentially of polybutylene terephthalate.

6. A shaped article having a thin partition wall structure with a thickness of 0.8mm or smaller, which article is composed of a composition comprising (A) a crystalline polyolefin resin, (B) an unsaturated carboxylic acid and/or its derivative, and (C) a thermoplastic polyester.

7. A shaped article according to claim 6, which is additionally composed of at least one thick part with a thickness greater than 0.8mm.

8. A method of producing a polyester resin composition, which method comprises melt-blending (A) a crystalline polyolefin resin, (B) an unsaturated carboxylic acid and/or its derivative, and (C) a thermoplastic polyester.

9. A method of preparing a shaped article having a thin partition wall structure with a thickness of 0.8mm or smaller, which method comprises injection moulding a composition according to any one of claims 1 to 5.
